# EUROPÄISCHE PATENTSCHRIFT

(11) **EP 3 079 850 B1**
(45) Veröffentlichungstag und Bekanntmachung des Hinweises auf die Patenterteilung: **13.01.2021**
(21) Anmeldenummer: 14786942.4
(22) Anmeldetag: 23.10.2014
(51) Int. Cl.: B23B 31/02

(54) **WERKZEUGANORDNUNG UND VERFAHREN DAFÜR**
TOOL ARRANGEMENT AND METHOD THEREFOR
AGENCEMENT D'OUTIL ET MÈTHODE À CET EFFET

(30) Priorität: 10.12.2013 DE 102013225472
(43) Veröffentlichungstag der Anmeldung: 19.10.2016
(73) Patentinhaber: KOMET Deutschland GmbH, 74354 Besigheim (DE)
(72) Erfinder: SPORS, Benno, 74354 Besigheim (DE); NITZSCHE, Hendrik, 71711 Steinheim an der Murr (DE); MAYER, Manuel, 75428 Illingen (DE)
(74) Vertreter: Gauss, Nikolai
(86) Internationale Anmeldenummer: PCT/EP2014/072694
(87) Internationale Veröffentlichungsnummer: WO 2015/086207

(56) Entgegenhaltungen:
- DE-A1- 4 400 425
- JP-A- S63 229 205
- US-A- 1 566 553
- US-A1- 2011 233 839

## Beschreibung

Die Erfindung betrifft eine Werkzeuganordnung mit einer Längsmittelachse, mit einem für das Rotieren um die Längsmittelachse an eine Maschinenspindel anschließbaren Werkzeughalter, mit einem Werkzeugkopf und mit einem den Werkzeugkopf tragenden Schaft mit einem Werkzeug zur Bearbeitung von Werkstücken, wobei der Werkzeughalter und der Schaft jeweils eine quer zu ihrer axialen Richtung ausgerichtete Planfläche aufweisen, wobei die Planflächen einander gegenüberliegen, und wobei der Werkzeughalter und der Schaft durch Verbindungsmittel drehfest und lösbar miteinander verbunden sind, welche einen in der axialen Richtung vorstehenden Zapfen und eine den Zapfen aufnehmende Aufnahme aufweisen, und mit einer Einrichtung zur Entkopplung von Schwingungen des Werkzeughalters und des den Werkzeugkopf tragenden Schafts.

Außerdem betrifft die Erfindung ein Verfahren für die Entkopplung von Schwingungen eines Werkzeughalters und eines Schafts mit einem Werkzeug, die bei der Bearbeitung von Werkstücken auftreten können, wobei der Werkzeughalter und der Schaft jeweils eine quer zu ihrer axialen Richtung ausgerichtete Planfläche aufweisen, wobei die Planflächen einander gegenüberliegen, und wobei der Werkzeughalter und der Schaft durch Verbindungsmittel drehfest und lösbar miteinander verbunden sind, welche einen in der axialen Richtung vorstehenden Zapfen und eine den Zapfen aufnehmende Aufnahme aufweisen.

Eine derartige Werkzeuganordnung und ein derartiges Verfahren ist aus der DE 44 00 425 A1 bekannt. Dort ist eine Werkzeuganordnung beschrieben, die eine elastomere Materialbrücke enthält, die das Übertragen von Schwingungen aus einer ersten Baugruppe der Werkzeuganordnung auf eine zweite Baugruppe der Werkzeuganordnung abschwächt.

Bearbeitungswerkzeuge wie beispielsweise Bohrwerkzeuge, die einen Werkzeugkopf, der der Bearbeitung von Werkstücken dient, sowie einen den Werkzeugkopf tragenden Schaft aufweisen, werden drehfest mit einem Werkzeughalter verbunden, der wiederum dafür bestimmt ist, drehfest mit einer Maschinenspindel verbunden zu werden, so dass die Maschine eine Drehbewegung auf das Werkzeug übertragen kann. Insbesondere lange Bearbeitungswerkzeuge bzw. Werkzeuganordnungen neigen dazu, beim Bearbeitungsvorgang zu schwingen. Die Schwingung der aus dem Werkzeug und dem Werkzeughalter zusammengesetzten Werkzeuganordnung erfolgt dabei meist in Frequenzbereichen, die für das menschliche Ohr unangenehm sind.

Es ist daher Aufgabe der Erfindung, eine Werkzeuganordnung bzw. einen Werkzeughalter der eingangs genannten Art derart weiterzubilden, dass ihr bzw. sein Schwingungsverhalten verbessert ist.

Diese Aufgabe wird erfindungsgemäß durch eine Werkzeuganordnung mit den Merkmalen des Anspruchs 1 sowie ein Verfahren mit den Merkmalen des Anspruchs 2 gelöst. Vorteilhafte Weiterbildungen der Erfindung sind Gegenstand der abhängigen Ansprüche.

Der Erfindung liegt der Gedanke zugrunde, die einzelnen Bauteile der Werkzeuganordnung bzw. des Werkzeughalters derart zu entkoppeln, dass sie nicht gemeinsam schwingen wie ein einstückiges Teil, sondern dass sie jeweils einzeln schwingen. Durch diese Maßnahme treten bei der Werkstückbearbeitung Schwingungen in höheren Frequenzbereichen auf, sodass sie vom menschlichen Ohr gar nicht oder als nicht so unangenehm wahrgenommen werden.

Gemäß einer ersten erfindungsgemäßen Maßnahme wird vorgeschlagen, dass zwischen den einander gegenüberliegenden und zumindest im Wesentlichen und möglichst genau parallel zueinander verlaufenden Planflächen am Schaft des Werkzeugs und am Werkzeughalter Mittel zur Reibungsverminderung angeordnet sind, die die Planflächen im Abstand zueinander halten. Zur Entkopplung des Werkzeugs und des Werkzeughalters weisen die Mittel zur Reibungsverminderung gegenüber mindestens einer und vorzugsweise gegenüber jeder der Planflächen einen geringeren Reibungskoeffizienten, insbesondere einen geringeren Haftreibungskoeffizienten, auf als die Planflächen bei einer direkten Anlage einander aufweisen. Zudem ist die Kompressibilität der Mittel zur Reibungsverminderung nicht großer als Kompressibilität des Schafts und als die Kompressibilität des Werkzeughalters, so dass die Werkzeuganordnung bei der Werkstückbearbeitung, bei der sie in axialer Richtung mit Kraft beaufschlagt wird, nicht stärker gestaucht wird als wenn die Planflächen direkt aneinander anlägen.

Die Mittel zur Reibungsverminderung können einen Ölfilm aufweisen bzw. aus einem Ölfilm bestehen. Dadurch wird die Reibung zwischen dem Schaft und dem Werkzeughalter im Bereich der Planflächen nahezu auf null reduziert. Zudem ist ein Ölfilm kaum kompressibel. Es ist jedoch auch möglich, dass die Mittel zur Reibungsverminderung ein Wälzkörper aufweisendes Axiallager aufweisen oder dass an mindestens einer der Planflächen eine stoffschlüssig mit ihr verbundene Beschichtung angeordnet ist, die aus einem anderen Material besteht als der Schaft bzw. der Werkzeughalter.

Gemäß einer bevorzugten Ausgestaltung weisen die Mittel zur Reibungsverminderung einen zwischen den Planflächen lose angeordneten Abstandshalter auf. Dieser kann an mindestens einer seiner den Planflächen zugewandten Oberflächen eine reibungsmindernde Beschichtung aufweisen. Vorzugsweise weist der Abstandshalter einen Aufnahmekörper auf, in dem Wälzkörper aufgenommen sind. Die Wälzkörper stehen aus mindestens einer der den Planflächen zugewandten Oberflächen des Aufnahmekörpers vor und liegen an der jeweiligen Planfläche an. Der Aufnahmekörper kann dabei aus einem elastomeren Material gefertigt sein, da die Kompressibilität des Abstandshalters durch die Kompressibilität der Wälzkörper definiert wird. Letztere können im Aufnahmekörper fixiert sein oder aber drehbar im Wälzkörper eingebettet sein, wodurch die Reibung weiter verringert wird.

Im Folgenden wird die Erfindung anhand zweier in der Zeichnung in schematischer Weise dargestellter Ausführungsbeispiele näher erläutert. Es zeigen
- Fig. 1a, 1b, 1c, 1d: eine Werkzeuganordnung mit einem Werkzeughalter und einem Werkzeugschaft in perspektivischer Ansicht, in Seitenansicht und im Längsschnitt entlang der Linie A-A sowie eine Detaildarstellung des Längsschnitts; und
- Fig. 2a, 2b, 2c: einen Abstandshalter in perspektivischer Darstellung, in Draufsicht und vergrößert im Schnitt entlang der Linie A-A.

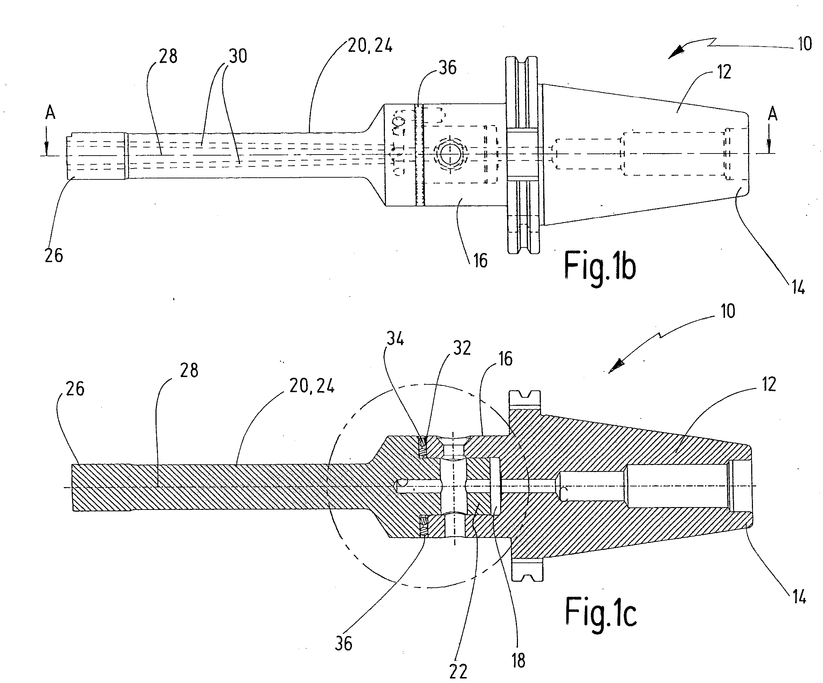

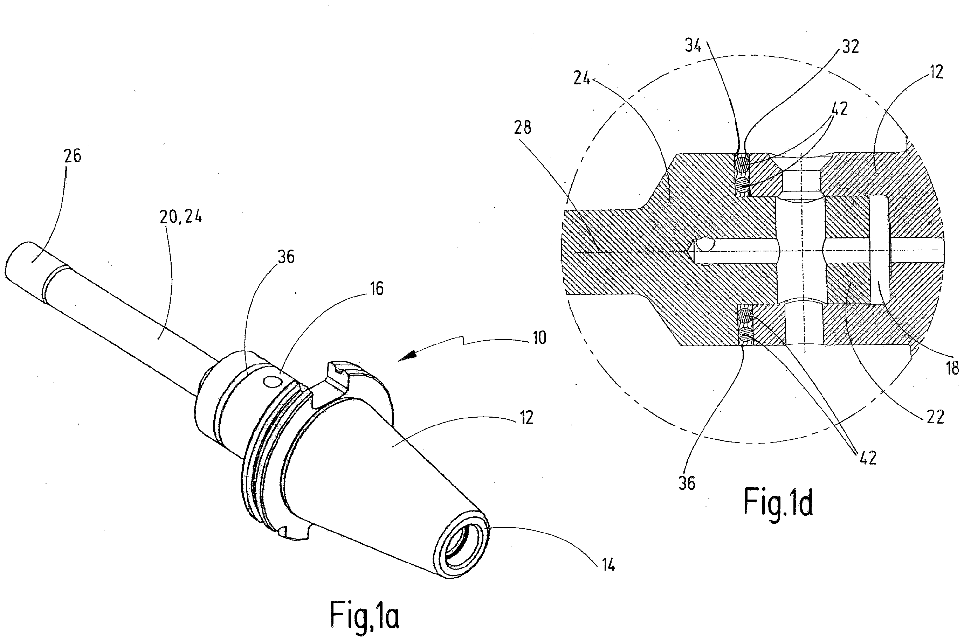

Die in Fig. 1a bis d dargestellte Werkzeuganordnung 10 weist einen Werkzeughalter 12 auf, der dafür bestimmt ist, mit einem sich von seinem einen Ende 14 aus erstreckenden Kegelstumpf drehfest mit einer Maschinenspindel verbunden zu werden, und der an seinem anderen Ende 16 eine Aufnahme 18 als Befestigungsmittel für ein Werkzeug 20 aufweist. Vom Werkzeug 20 ist in der Zeichnung nur der einen in die Aufnahme 18 eingreifenden Zapfen 22 aufweisende Schaft 24 dargestellt, der an dem dem Zapfen 22 abgewandten Ende 26 Mittel zur drehfesten Befestigung eines Werkzeugkopfs aufweist. Die Werkzeuganordnung 10 dreht sich bei der Bearbeitung von Werkstücken um ihre Längsmittelachse 28. In Fig. 1b sind gestrichelt sich in axialer Richtung durch den Schaft 24 erstreckende, divergierende Kühlmittelkanäle 30 angedeutet.

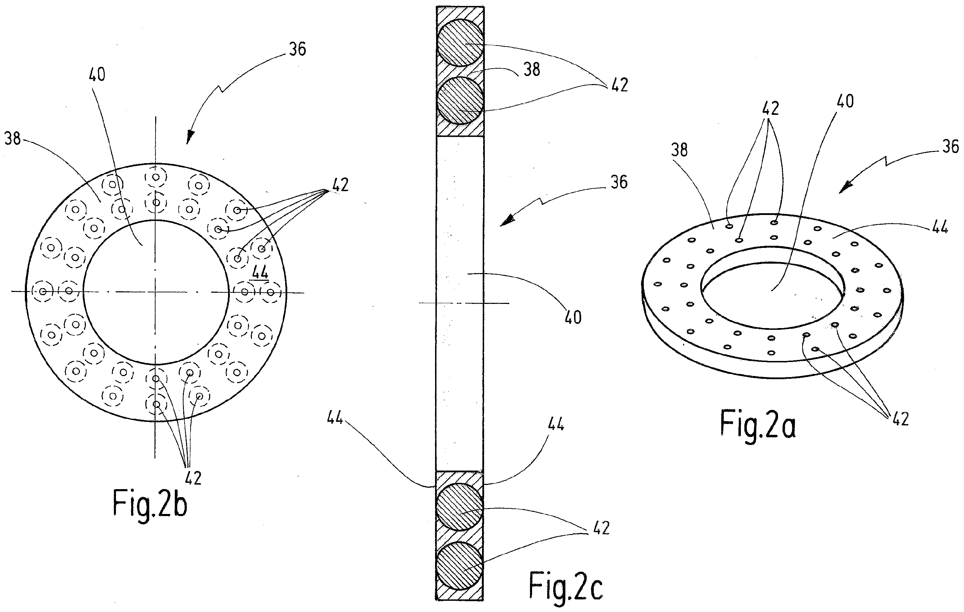

Im Bereich der Aufnahme 18 und des Zapfens 22 weisen der Werkzeughalter 12 und der Schaft 24 jeweils eine kreisringförmige, sich senkrecht zur Längsmittelachse 28 erstreckende Planfläche 32, 34 auf, wobei die Planfläche 32 des Werkzeughalters 12 der Planfläche 34 des Schafts 24 im Abstand gegenüber liegt. Zwischen den Planflächen 32, 34 ist ein Abstandshalter 36 angeordnet (vgl. Fig. 2a bis c), der einen ringförmigen Aufnahmekörper 38 aus elastomerem Material aufweist, durch dessen mittige Ausnehmung 40 der Zapfen 22 durchgeführt ist. In den Aufnahmekörper 38 sind kugelförmige Wälzkörper 42 eingebettet, die beidseitig aus den einander abgewandten Oberflächen 44 des Aufnahmekörpers 38 ein Stück weit herausstehen und an den Planflächen 32, 34 anliegen. Die Wälzkörper 42 sind dabei aus einem Material gefertigt, dessen Kompressibilität nicht größer ist als die Kompressibilität des Materials, aus dem der Werkzeughalter 12 gefertigt ist und als die Kompressibilität des Materials, aus dem der Schaft 24 gefertigt ist. Gegenüber einer Werkzeuganordnung, bei der die Planflächen 32, 34 direkt aneinander anliegen, ist die Reibung zwischen dem Werkzeughalter 12 und dem Schaft 24 im Bereich der Planflächen 32, 34 deutlich vermindert. Dies ist insbesondere deshalb von Bedeutung, da beim Einspannen des Schafts 24 in den Werkzeughalter 12 sowie beim Anpressen des Werkzeugs 20 auf ein Werkstück in axialer Richtung hohe Kräfte auf die Planflächen 32, 34 wirken, so dass bei hohen Reibungskoeffizienten zwischen den Planflächen 32, 34 das Werkzeug 20 und der Werkzeughalter 12 wie ein einstückiges Bauteil schwingen können. Der Abstandshalter 36 vermindert die im Bereich der Planflächen 32, 34 auftretenden Reibungskräfte, indem sein Reibungskoeffizient in Bezug auf jede der Planflächen 32, 34 geringer ist als der Reibungskoeffizient der Planflächen 32, 34 bei direkter Anlage aneinander, so dass der Werkzeughalter 12 und das Werkzeug 20 im Hinblick auf Schwingungen der Werkzeuganordnung 10 nahezu entkoppelt sind.

### Bezugszeichenliste

- 10: Werkzeuganordnung
- 12, 112: Werkzeughalter
- 14, 16,116, 118: Enden des Werkzeughalters
- 18, 126: Aufnahme
- 20: Werkzeug
- 22: Zapfen
- 24: Schaft
- 26: Ende des Schafts
- 28: Längsmittelachse
- 30: Kühlmittelkanal
- 32, 34: Planflächen
- 36: Abstandshalter
- 38: Aufnahmekörper
- 40: mittige Ausnehmung im Abstandshalter
- 42: Wälzkörper
- 44: Oberfläche

## Patentansprüche

1. Werkzeuganordnung mit einer Längsmittelachse (28), mit einem für das Rotieren um die Längsmittelachse (28) an eine Maschinenspindel anschließbaren Werkzeughalter (12),
mit einem Werkzeugkopf und mit einem den Werkzeugkopf tragenden Schaft (24) mit einem Werkzeug (20) zur Bearbeitung von Werkstücken, wobei der Werkzeughalter (12) und der Schaft (24) jeweils eine quer zu ihrer axialen Richtung ausgerichtete Planfläche (32, 34) aufweisen, wobei die Planflächen (32, 34) einander gegenüberliegen, und wobei der Werkzeughalter (12) und der Schaft (24) durch Verbindungsmittel (18, 22) drehfest und lösbar miteinander verbunden sind, welche einen in der axialen Richtung vorstehenden Zapfen (22) und eine den Zapfen (22) aufnehmende Aufnahme (18) aufweisen, und
mit einer Einrichtung zur Entkopplung von Schwingungen des Werkzeughalters (12) und des den Werkzeugkopf tragenden Schafts (24),
**dadurch gekennzeichnet, dass**
die Einrichtung zur Entkopplung von Schwingungen zwischen den Planflächen (32, 34) angeordnete Mittel (36) zur Reibungsverminderung aufweist, die die Planflächen (32, 34) im Abstand zueinander halten, die gegenüber mindestens einer der Planflächen (32, 34) einen geringeren Reibungskoeffizienten aufweisen als die Planflächen (32, 34) bei direkter Anlage aneinander und deren Kompressibilität nicht größer ist als die Kompressibilität des Schafts (24) und als die Kompressibilität des Werkzeughalters (12).

2. Verfahren für die Entkopplung von Schwingungen eines Werkzeughalters (12) und eines Schafts (24) mit einem Werkzeug (20), die bei der Bearbeitung von Werkstücken auftreten können,
wobei der Werkzeughalter (12) und der Schaft (24) jeweils eine quer zu ihrer axialen Richtung ausgerichtete Planfläche (32, 34) aufweisen, wobei die Planflächen (32, 34) einander gegenüberliegen, und wobei der Werkzeughalter (12) und der Schaft (24) durch Verbindungsmittel (18, 22) drehfest und lösbar miteinander verbunden sind, welche einen in der axialen Richtung vorstehenden Zapfen (22) und eine den Zapfen (22) aufnehmende Aufnahme (18) aufweisen,
**dadurch gekennzeichnet, dass**
Mittel (36) zur Reibungsverminderung bereitgestellt werden, die die Planflächen (32, 34) im Abstand zueinander halten, die gegenüber mindestens einer der Planflächen (32, 34) einen geringeren Reibungskoeffizienten aufweisen als die Planflächen (32, 34) bei direkter Anlage aneinander und deren Kompressibilität nicht größer ist als die Kompressibilität des Schafts (24) und als die Kompressibilität des Werkzeughalters (12).

3. Werkzeuganordnung nach Anspruch 1 oder Verfahren nach Anspruch 2, **dadurch gekennzeichnet, dass** die Mittel zur Reibungsverminderung einen Ölfilm aufweisen.

4. Werkzeuganordnung nach Anspruch 1 oder 3 oder Verfahren nach Anspruch 2 oder 3, **dadurch gekennzeichnet, dass** die Mittel zur Reibungsverminderung eine Beschichtung an mindestens einer der Planflächen (32,34) aufweisen, die aus einem anderen Material besteht als der Schaft (24) bzw. der Werkzeughalter (12, 112) und stoffschlüssig mit der jeweiligen Planfläche (32, 34) verbunden ist.

5. Werkzeuganordnung nach einem der Ansprüche 1. 3 oder 4 oder Verfahren nach Anspruch 2 bis 4, **dadurch gekennzeichnet, dass** die Mittel zur Reibungsverminderung ein Wälzkörper aufweisendes Axiallager aufweisen.

6. Werkzeuganordnung nach einem der Ansprüche 1 oder 3 bis 5 oder Verfahren nach einem der Ansprüche 2 bis 5, **dadurch gekennzeichnet, dass** die Mittel zur Reibungsverminderung einen lose zwischen den Planflächen angeordneten Abstandshalter (36) aufweisen.

7. Werkzeuganordnung oder Verfahren nach Anspruch 6, **dadurch gekennzeichnet, dass** der Abstandshalter an mindestens einer seiner den Planflächen (32, 34) zugewandten Oberflächen eine reibungsmindernde Beschichtung aufweist.

8. Werkzeuganordnung oder Verfahren nach Anspruch 6 oder 7, **dadurch gekennzeichnet, dass** der Abstandshalter (36) einen Aufnahmekörper (38) aufweist, wobei aus mindestens einer der den Planflächen (32, 34) zugewandten Oberflächen (44) des Aufnahmekörpers (38) Wälzkörper (42) vorstehen und an der betreffenden Planfläche (32, 34) bzw. an den Planflächen (32, 34) anliegen.

9. Werkzeuganordnung oder Verfahren nach Anspruch 8, **dadurch gekennzeichnet, dass** der Aufnahmekörper (38) aus einem elastomeren Material gefertigt ist.

10. Werkzeuganordnung oder Verfahren nach Anspruch 8 oder 9, **dadurch gekennzeichnet, dass** die Wälzkörper (42) drehbar im Aufnahmekörper (38) eingebettet sind.

11. Werkzeuganordnung oder Verfahren nach Anspruch 8 oder 9, **dadurch gekennzeichnet, dass** die Wälzkörper (42) im Aufnahmekörper (38) fixiert sind.

## Claims

1. Tool arrangement having a longitudinal center axis (28),
having a tool holder (12) which can be connected to a machine spindle for rotation around the longitudinal center axis (28),
having a tool head and having a shank (24) which supports the tool head having a tool (20) for machining of workpieces,
wherein the tool holder (12) and the shank (24) in each case have a flat surface (32, 34) which is oriented transversely with respect to their axial direction,
wherein the flat surfaces (32, 34) lie opposite to one another, and wherein the tool holder (12) and the shank (24) are connected rotational fixedly and releasably to one another by way of connecting means (18, 22) which have a journal (22) which projects in the axial direction and a receptacle (18) which receives the journal (22),
and having a device for decoupling vibrations of the tool holder (12) and of the shank (24) which supports the tool head,
**characterized in that**
the device for decoupling vibrations has means (36) for reducing friction that are arranged between the flat surfaces (32, 34) which hold the flat surfaces (32, 34) at a spacing from one another, have a lower coefficient of friction than at least one of the flat surfaces (32, 34) when in direct contact with one another and whose compressibility is not greater than the compressibility of the shank (24) and than the compressibility of the tool holder (12).

2. Method for decoupling vibrations of a tool holder (12) and a shank (24) having a tool (20) which can occur during the machining of workpieces,
wherein the tool holder (12) and the shank (24) in each case have a flat surface (32, 34) which is oriented transversely with respect to their axial direction,
wherein the flat surfaces (32, 34) lie opposite to one another, and wherein the tool holder (12) and the shank (24) are connected rotational fixedly and releasably to one another by way of connecting means (18, 22) which have a journal (22) which projects in the axial direction and a receptacle (18) which receives the journal (22),
**characterized in that**
means for reducing friction are provided, which hold the flat surfaces (32, 34) at a spacing from one another, have a lower coefficient of friction than at least one of the flat surfaces (32, 34) when in direct contact with one another and whose compressibility is not greater than the compressibility of the shank (24) and than the compressibility of the tool holder (12).

3. Tool arrangement according to claim 1 or method according to claim 2, **characterized in that** the means for reducing friction have an oil film.

4. Tool arrangement according to claim 1 or 3 or method according to claim 2 or 3, **characterized in that** the means for reducing friction have a coating on at least one of the flat surfaces (32, 34), the coating consists of a different material than the shank (24) and the tool holder (12, 112), respectively, and is integrally joined to the respective flat surface (32, 34).

5. Tool arrangement according to claim 1, 3 or 4 or method according to claim 2 to 4, **characterized in that** the means for reducing friction have an axial bearing which has rolling bodies.

6. Tool arrangement according to claim 1 or 3 to 5 or method according to claim 2 to 5, **characterized in that in that** the means for reducing friction have a spacer element (36) which is arranged loosely between the flat surfaces.

7. Tool arrangement or method according to claim 6, **characterized in that** the spacer element has a friction-reducing coating on at least one of its surfaces which face the flat surfaces (32, 34).

8. Tool arrangement or method according to claim 6 or 7, **characterized in that** the spacer element (36) has a receiving body (38), wherein rolling bodies (42) project from at least one of the surfaces (44) of the receiving body (38) which face the flat surfaces (32, 34) and rest on the relevant flat surface (32, 34) or rest on the flat surfaces (32, 34).

9. Tool arrangement or method according to claim 8, **characterized in that** the receiving body (38) is produced from an elastomeric material.

10. Tool arrangement or method according to claim 8 or 9, **characterized in that** the rolling bodies (42) are embedded rotatably in the receiving body.

11. Tool arrangement or method according to claim 8 or 9, **characterized in that** the rolling bodies (42) are fixed in the receiving body (38).

## Revendications

1. Système d'outil comprenant
un axe médian longitudinal (28),
un porte-outil (12) pouvant être raccordé à une broche de machine pour la rotation autour de l'axe médian longitudinal (28),
une tête d'outil et un arbre (24) portant la tête d'outil avec un outil (20) pour l'usinage de pièces, le porte-outil (12) et l'arbre (24) présentant chacun une surface plane (32, 34) orientée transversalement à leur direction axiale, les surface planes (32, 34) étant en regard l'une de l'autre, et le porte-outil (12) et l'arbre (24) étant connectés l'un à l'autre de manière solidaire en rotation et de manière amovible par des moyens de liaison (18, 22) qui présentent un tourillon (22) saillant dans la direction axiale et un logement (18) recevant le tourillon (22), et
comprenant un dispositif de désaccouplement des oscillations du porte-outil (12) et de l'arbre (24) portant la tête d'outil,
**caractérisé en ce que**
le dispositif de désaccouplement des oscillations présente des moyens (36) de réduction des frottements disposés entre les surfaces planes (32, 34), qui maintiennent à distance l'une de l'autre les surfaces planes (32, 34), qui présentent, par rapport à au moins l'une des surfaces planes (32, 34), un plus faible coefficient de friction que les surfaces planes (32, 34) lors d'une application directe l'une contre l'autre et dont la compressibilité n'est pas supérieure à la compressibilité de l'arbre (24) et à la compressibilité du porte-outil (12).

2. Procédé pour le désaccouplement des oscillations d'un porte-outil (12) et d'un arbre (24) avec un outil (20), lesquelles peuvent se produire lors de l'usinage de pièces,
dans lequel le porte-outil (12) et l'arbre (24) présentent chacun une surface plane (32, 34) orientée transversalement à leur direction axiale, les surfaces planes (32, 34) étant en regard l'une de l'autre, et le porte-outil (12) et l'arbre (24) étant connectés l'un à l'autre de manière solidaire en rotation et de manière amovible par des moyens de liaison (18, 22) qui présentent un tourillon (22) saillant dans la direction axiale et un logement (18) recevant le tourillon (22),
**caractérisé en ce que**
des moyens (36) de réduction des frottements sont prévus, lesquels maintiennent à distance l'une de l'autre les surfaces planes (32, 34), présentent, par rapport à au moins l'une des surfaces planes (32, 34), un plus faible coefficient de friction que les surfaces planes (32, 34) lors d'une application directe l'une contre l'autre et dont la compressibilité n'est pas supérieure à la compressibilité de l'arbre (24) et à la compressibilité du porte-outil (12).

3. Système d'outil selon la revendication 1 ou procédé selon la revendication 2, **caractérisé en ce que** les moyens de réduction des frottements présentent un film d'huile.

4. Système d'outil selon la revendication 1 ou 3, ou procédé selon la revendication 2 ou 3, **caractérisé en ce que** les moyens de réduction des frottements présentent un revêtement sur au moins l'une des surfaces planes (32, 34), lequel se compose d'un matériau différent de celui de l'arbre (24) ou du porte-outil (12, 112) et est connecté par liaison de matière à la surface plane respective (32, 34).

5. Système d'outil selon l'une quelconque des revendications 1, 3 ou 4, ou procédé selon les revendications 2 à 4, **caractérisé en ce que** les moyens de réduction des frottements présentent un palier axial présentant des corps de roulement.

6. Système d'outil selon l'une quelconque des revendications 1 ou 3 à 5 ou procédé selon l'une quelconque des revendications 2 à 5, **caractérisé en ce que** les moyens de réduction des frottements présentent un espaceur (36) disposé de manière lâche entre les surfaces planes.

7. Système d'outil ou procédé selon la revendication 6, **caractérisé en ce que** l'espaceur présente, au niveau d'au moins l'une de ses surfaces tournées vers les surfaces planes (32, 34), un revêtement réduisant les frottements.

8. Système d'outil ou procédé selon la revendication 6 ou 7, **caractérisé en ce que** l'espaceur (36) présente un corps de réception (38), des corps de roulement (42) dépassant d'au moins l'une des surfaces (44) du corps de réception (38) tournées vers les surfaces planes (32, 34), et s'appliquant contre la surface plane concernée (32, 34) ou contre les surfaces planes (32, 34).

9. Système d'outil ou procédé selon la revendication 8, **caractérisé en ce que** le corps de réception (38) est fabriqué à partir d'un matériau élastomère.

10. Système d'outil ou procédé selon la revendication 8 ou 9, **caractérisé en ce que** les corps de roulement (42) sont encastrés de manière rotative dans le corps de réception (38).

11. Système d'outil ou procédé selon la revendication 8 ou 9, **caractérisé en ce que** les corps de roulement (42) sont fixés dans le corps de réception (38).
